# EUROPÄISCHE PATENTSCHRIFT

(11) **EP 1 235 443 B1**
(45) Veröffentlichungstag und Bekanntmachung des Hinweises auf die Patenterteilung: **17.03.2004**
(21) Anmeldenummer: 01810191.5
(22) Anmeldetag: 23.02.2001
(51) Int. Cl.: H04Q 7/22, G01S 5/00, G01S 5/14

(54) **Verfahren und System zur Übermittlung von ortsspezifischen Informationen an mobile Teilnehmer**
Method and system for transmitting location specific informations to mobile subscribers
Procédé et système pour la transmission d'informations dépendant d'un emplacement vers des abonnés mobiles

(43) Veröffentlichungstag der Anmeldung: 28.08.2002
(73) Patentinhaber: Swisscom AG, 3000 Bern 29 (CH)
(72) Erfinder: Keller, Rico, 8003 Zürich (CH); Messmer, Bruno, Dr., 3600 Thun (CH)
(74) Vertreter: BOVARD AG - Patentanwälte

(56) Entgegenhaltungen:
- WO-A-00/70504
- WO-A-96/13951
- WO-A-97/41654

## Beschreibung

Die vorliegende Erfindung betrifft ein Verfahren und ein System zur Übermittlung von ortsspezifischen Informationen an mobile Teilnehmer. Die vorliegende Erfindung betrifft insbesondere ein Verfahren und ein System zur Übermittlung von ortsspezifischen Informationen über ein Mobilfunknetz an mobile Teilnehmer, die jeweils mit einem mobilen Kommunikationsendgerät ausgestattet sind, wobei geografische Positionen der mobilen Kommunikationsendgeräte bestimmt und in einer computerbasierten Zentraleinheit gespeichert werden.

Insbesondere mit der Verbreitung von Mobilfunknetzen, beispielsweise zelluläre Mobilfunktelefonnetze wie GSM- (Global System for Mobile Communication) oder UMTS-Netze (Universal Mobile Telephone System), wurde es möglich, die aktuelle geografische Position von einer Vielzahl von mobilen Teilnehmern, respektive von deren mobilen Kommunikationsendgeräten, zu bestimmen und zentralisiert zu erfassen. In einigen Systemen wird dabei die geografische Position eines Teilnehmers mittels der Mobilfunknetzinfrastruktur bestimmt, beispielsweise basierend auf der Messung von Laufzeitwerten oder Signalstärken zwischen Basisstationen und den mobilen Kommunikationsendgeräten. In anderen Systemen werden die mobilen Kommunikationsendgeräte mit GPS-Empfängem (Global Positioning System) ausgerüstet, mittels denen die geografische Position jeweils direkt in den Kommunikationsendgeräten bestimmt werden kann.

Durch die zentralisierte Erfassung der aktuellen geografischen Position eines mobilen Teilnehmers eines Mobilfunknetzes wurde es auch möglich, mobile Teilnehmer automatisch mit ortsspezifischen, das heisst von einer geografischen Position abhängigen, Informationen zu versorgen. Dabei werden in Abhängigkeit der aktuellen geografischen Position eines betreffenden Teilnehmers Informationen, die dieser aktuellen geografischen Position zugeordnet sind, automatisch von einer Zentraleinheit über das Mobilfunknetz an das Kommunikationsendgerät des betreffenden Teilnehmers übermittelt, wo sie weiterverarbeitet und/oder für den Teilnehmer wiedergegeben werden können, beispielsweise sichtbar auf einer Anzeige oder hörbar über elektroakustische Wandler.

Die bekannten Verfahren und Systeme zur Übermittlung von ortsspezifischen Informationen an mobile Teilnehmer weisen den Nachteil auf, dass sie die ortsspezifischen Informationen jeweils nur in Abhängigkeit derjenigen geografischen Position des betreffenden mobilen Teilnehmers automatisch an das Kommunikationsendgerät des betreffenden mobilen Teilnehmers übermitteln können, an der sich der betreffende mobile Teilnehmer zum momentanen Zeitpunkt befindet.

In der Patentanmeldung WO 00/70504 wird ein Informationsverbreitungssystem beschrieben, das Angaben über geografische Position und Identifizierung eines mobilen Kunden entgegennimmt, die von einem Mobilendgerät des Kunden drahtlos übermittelt werden. Basierend auf der empfangenen Identifizierung des mobilen Kunden und unter Zuhilfenahme eines gespeicherten Benutzersprofils wählt das Informationsverbreitungssystem gemäss WO 00/70504 kundenspezifische Informationen aus. Basierend auf den empfangenen Angaben über die geografische Position bestimmt das Informationsverbreitungssystem gemäss WO 00/70504 die Reisegeschwindigkeit und die Reiserichtung des mobilen Kunden. Auf Grund der bestimmten Reisegeschwindigkeit und Reiserichtung plant das Informationsverbreitungssystem gemäss WO 00/70504 die Anzeige der ausgewählten kundenspezifischen Informationen zeitlich so, dass sie dann auf einer Anzeigetafel angezeigt werden, wenn der betreffende mobile Kunde die Anzeigetafel passiert. Gemäss WO 00/70504 können die kundenspezifischen Informationen auch auf einer Anzeige des Mobilendgeräts angezeigt werden.

Es ist eine Aufgabe dieser Erfindung, ein neues Verfahren und ein neues System zur automatischen Übermittlung von ortsspezifischen Informationen an mobile Teilnehmer eines Mobilfunknetzes vorzuschlagen, welche insbesondere nicht die Nachteile des Stands der Technik aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in der Zentraleinheit jeweils basierend auf mehreren gespeicherten geografischen Positionen eines mobilen Kommunikationsendgeräts eines betreffenden mobilen Teilnehmers mindestens eine zukünftige geografische Position bestimmt wird, die vom betreffenden mobilen Teilnehmer erwartungsweise erreicht werden wird, und dass Informationen, die der bestimmten zukünftigen geografischen Position zugeordnet sind, ausgewählt und an das mobile Kommunikationsendgerät des betreffenden mobilen Teilnehmers übermittelt werden. Dies hat den Vorteil, dass mobile Teilnehmer automatisch mit ortsspezifischen Informationen versorgt werden können, beispielsweise mit ortsspezifischen Werbeinformationen, bevor sie die geografische Position erreicht haben, auf die sich die ortsspezifischen Informationen beziehen. Dies wiederum hat den Vorteil, dass dem betreffenden mobilen Teilnehmer Zeit zur Verfügung steht, um die ortsspezifischen Informationen vor dem Erreichen der betreffenden geografischen Position zu studieren, was für den mobilen Teilnehmer, insbesondere bei Informationen mit Angaben über verfügbare Dienste/Dienstleistungen oder Verbindungen von Verkehrsmitteln, äusserst hilfreich sein kann.

Erfindungsgemäss wird in der Zentraleinheit basierend auf mehreren gespeicherten geografischen Positionen des mobilen Kommunikationsendgeräts des betreffenden mobilen Teilnehmers der Verkehrsweg bestimmt, auf dem sich der betreffende mobile Teilnehmer bewegt, und die ortsspezifischen Informationen werden unter Berücksichtigung des bestimmten Verkehrswegs ausgewählt. Dies hat insbesondere den Vorteil, dass die ortsspezifischen Informationen auf geografische Positionen beschränkt werden können, die für den betreffenden mobilen Benutzer auf dem bestimmten Verkehrsweg, beispielsweise eine spezifische Autobahn, Strasse oder Eisenbahnstrecke, tatsächlich erreichbar sind.

Erfindungsgemäss wird in der Zentraleinheit basierend auf dem bestimmten Verkehrsweg der Typ des Verkehrsmittels bestimmt, das vom betreffenden mobilen Teilnehmer benutzt wird, und die ortsspezifischen Informationen werden unter Berücksichtigung des bestimmten Typs des Verkehrsmittels ausgewählt. Dies hat insbesondere den Vorteil, dass die ortsspezifischen Informationen Angaben beinhalten, die für den bestimmten Typ des Verkehrsmittels, beispielsweise ein Kraftfahrzeug oder eine Eisenbahn, relevant sind.

In einer Ausführungsvariante wird in der Zentraleinheit basierend auf den gespeicherten geografischen Positionen des mobilen Kommunikationsendgeräts des betreffenden mobilen Teilnehmers die Geschwindigkeit des betreffenden mobilen Teilnehmers bestimmt, wird basierend auf der bestimmten Geschwindigkeit des betreffenden mobilen Teilnehmers ein Zeitpunkt bestimmt, zu dem der betreffende mobile Teilnehmer die bestimmte zukünftige geografische Position erwartungsweise erreichen wird, und die ortsspezifischen Informationen werden unter Berücksichtigung dieses bestimmten Zeitpunkts ausgewählt. Diese Ausführungsvariante hat insbesondere den Vorteil, dass ortsspezifische Informationen, die zudem zeitsensitiv sind, so beschränkt werden können, dass sie für den bestimmten Zeitpunkt relevant sind.

In einer Ausführungsvariante werden die ortsspezifischen Informationen für den betreffenden mobilen Teilnehmer basierend auf teilnehmerspezifischen Kriterien gefiltert. Diese Ausführungsvariante hat den Vorteil, dass die ortsspezifischen Informationen auf Angaben beschränkt werden können, für die sich der betreffende mobile Teilnehmer interessiert, beispielsweise Angaben betreffend spezifische Dienste/Dienstleistungen, respektive Dienstanbieter wie Hotels, Restaurants, Einkaufszentren oder Raststätten, Angaben betreffend touristische Attraktionen oder Angaben betreffend Verbindungen/Anschlüsse von Verkehrsmitteln für spezifische Reiseziele.

Nachfolgend wird eine Ausführung der vorliegenden Erfindung anhand eines Beispieles beschrieben. Das Beispiel der Ausführung wird durch folgende einzige beigelegte Figur illustriert:

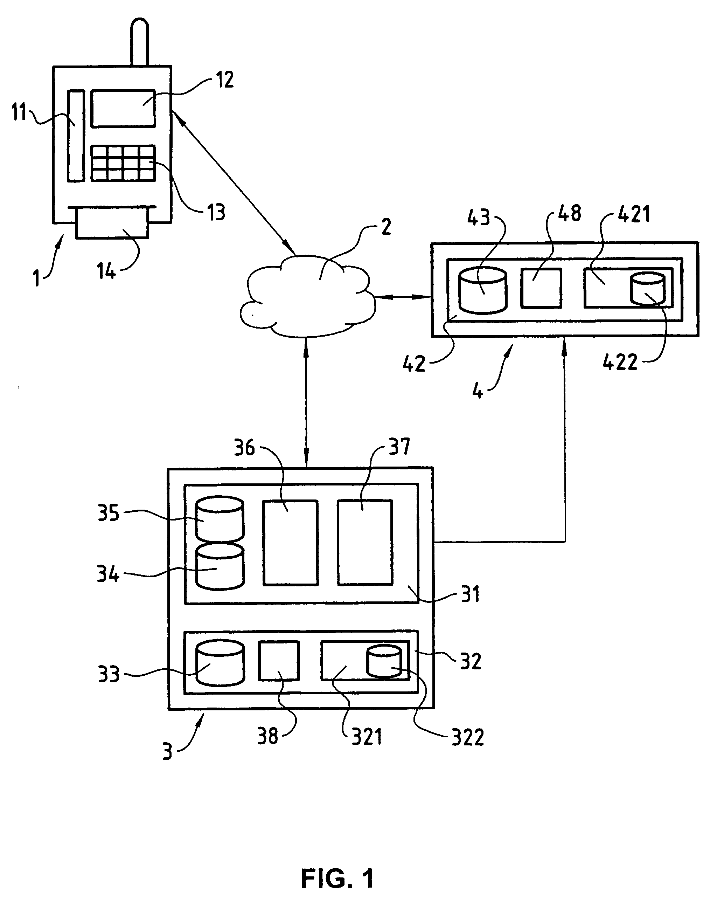

Figur 1 zeigt ein Blockdiagramm, welches schematisch ein System zur Übermittlung von ortsspezifischen Informationen an mobile Teilnehmer darstellt, in welchem System ein mobiles Kommunikationsendgerät über ein Mobilfunknetz mit einer Zentraleinheit verbunden ist.

In der Figur 1 bezieht sich die Bezugsziffer 1 auf ein mobiles Kommunikationsendgerät eines mobilen Teilnehmers eines Mobilfunknetzes 2. Das mobile Kommunikationsendgerät 1 ist beispielsweise ein Mobilfunktelefon oder ein mobiles Datenterminal, ein Laptop- oder Palmtop-Computer, welche jeweils ein Kommunikationsmodul für den Datenaustausch über das Mobilfunknetz 2 umfassen. Das mobile Kommunikationsendgerät 1 umfasst eine Anzeige 12 zur sichtbaren Darstellung von Informationen, Bedienungselemente 13 zur Eingabe von Daten, ein Teilnehmeridentifizierungsmodul 14, beispielsweise eine SIM-Karte (Subscriber Identification Module), die als Chipkarte ausgeführt ist, sowie Positionsbestimmungsmittel 11, beispielsweise einen GPS-Empfänger (Global Positioning System). Das Mobilfunknetz 2 ist beispielsweise ein GSM- oder ein UMTS-Netz oder ein ähnliches Mobilfunknetz für die Mobilfunktelefonie, das beispielsweise auch WAP-tauglich ist (Wireless Application Protocol).

Das mobile Kommunikationsendgerät 1 ist für den Datenaustausch über das Mobilfunknetz 2 mit einer Zentraleinheit 3 und in einer Ausführungsvariante mit einer Werbezentrale 4 verbindbar. Die Zentraleinheit 3 umfasst einen Computer, der zur Ausführung des erfindungsgemässen Verfahrens erste Mittel 31 und zweite Mittel 32 umfasst, die programmierte Softwaremodule und Softwarefunktion sowie Datenspeicher 33, 34, 35 mit ortsspezifischen Informationen, mit geografischen Karteninformationen und mit erfassten geografischen Positionen umfassen. Die Werbezentrale 4 umfasst einen Computer, der zur Ausführung einer Ausführungsvariante des beschriebenen Verfahrens zweite Mittel 42 umfasst, die den zweiten Mitteln 32 der Zentraleinheit 3 entsprechen und programmierte Softwaremodule und Softwarefunktion sowie einen Datenspeicher 43 mit ortsspezifischen Informationen umfassen.

Die aktuelle geografische Position von mobilen Kommunikationsendgeräten 1 von mobilen Teilnehmern, die beispielsweise einen entsprechenden Dienst abonniert haben, die sich in einem vordefinierten geografischen Gebiet befinden und/oder die sich mindestens mit einer vordefinierten Minimalgeschwindigkeit bewegen, werden durch die Positionsbestimmungsmittel 11 oder durch alternative Positionsbestimmungsmittel der Infrastruktur des Mobilfunknetzes 2 bestimmt, beispielsweise periodisch, und vom mobilen Kommunikationsendgerät 1, respektive von der Infrastruktur des Mobilfunknetzes 2, an die Zentraleinheit 3 übertragen, wo sie im Datenspeicher 35 gespeichert werden. Die bestimmten geografischen Positionen werden im Datenspeicher 35 beispielsweise mit der Rufnummer des mobilen Kommunikationsendgeräts 1 und/oder mit einer Teilnehmeridentifizierung des betreffenden Teilnehmers verknüpft, beispielsweise mit der auf dem Teilnehmeridentifizierungsmodul 14 gespeicherten IMSI (International Mobile Subscriber Identity). Die bestimmten geografischen Positionen werden im Datenspeicher 35 zudem mit einer Zeitangabe verknüpft, die angibt, wann sich der betreffende mobile Teilnehmer an dieser geografischen Position aufhielt.

Die ersten Mittel der Zentraleinheit 3 umfassen ein programmiertes Softwaremodul 36, welches aus mehreren für das mobile Kommunikationsendgerät 1 bestimmten und gespeicherten geografischen Positionen einen Wegvektor bestimmt, der den vom betreffenden mobilen Teilnehmer zurückgelegten Weg punktweise beschreibt, sowie einen Geschwindigkeitsvektor berechnet, der die aktuelle Position, die durchschnittliche Geschwindigkeit und die Richtung enthält, mit der, respektive in der, sich der betreffende mobile Teilnehmer bewegt.

Die ersten Mittel der Zentraleinheit 3 umfassen ein weiteres programmiertes Softwaremodul 37, durch welches der bestimmte Wegvektor und/oder der berechnete Geschwindigkeitsvektor mit den im Datenspeicher 34 gespeicherten geografischen Karteninformationen verglichen werden, die beispielsweise in vektorisierter Form gespeichert sind. Durch diese Vergleichsoperation kann der Verkehrsweg bestimmt werden, auf dem sich der betreffende mobile Teilnehmer bewegt, beispielsweise eine spezifische Autobahn, Strasse oder Eisenbahnstrecke. Basierend auf dem bestimmten Verkehrsweg können zukünftige geografische Positionen bestimmt werden, die vom betreffenden mobilen Teilnehmer erwartungsweise in der nahen Zukunft erreicht werden, beispielsweise Raststätten, Tankstellen, Ortschaften, oder Bahnhöfe. Basierend auf dem bestimmten Verkehrsweg kann zudem der Typ des Verkehrsmittels bestimmt werden, das vom betreffenden mobilen Teilnehmer benutzt wird, beispielsweise ein Kraftfahrzeug oder eine Eisenbahn. Basierend auf der bestimmten Geschwindigkeit, dem bestimmten Verkehrsweg, respektive den bestimmten zukünftigen geografischen Positionen, sowie der aktuellen geografischen Position kann zudem bestimmt werden, zu welchem Zeitpunkt der betreffende mobile Teilnehmer die bestimmten zukünftigen geografischen Positionen erwartungsweise erreichen wird. Falls der Typ des Verkehrsmittels ein öffentliches Verkehrsmittel ist, können zudem entsprechende gespeicherte Fahrplaninformationen hinzugezogen werden, um diesen erwarteten Zeitpunkt zu bestimmen.

Die durch die programmierten Softwaremodule 36, 37 der ersten Mittel 31 bestimmten zukünftigen geografischen Positionen, die diesbezüglichen erwarteten Zeitpunkte, der Verkehrsweg und/oder der Typ des Verkehrsmittels werden zusammen mit der Rufnummer des betreffenden mobilen Kommunikationsendgeräts und/oder der Teilnehmeridentifizierung des betreffenden mobilen Teilnehmers an die zweiten Mittel 32 übertragen. Je nach Ausführungsvariante können die zweiten Mittel 42 auch in einer externen Einheit 4 ausserhalb der Zentraleinheit 3, beispielsweise in einer Werbezentrale 4, eingerichtet sein, so dass die oben beschriebenen, durch die ersten Mittel 31 der Zentraleinheit 3 bestimmten Werte in einer Datenmeldung, beispielsweise über ein Kommunikationsnetz, beispielsweise das öffentliche geschaltete Telefonnetz oder das Internet, zur weiteren Verwendung an die zweiten Mittel 42 der externen Einheit 4 übertragen werden. Die letztere Ausführungsvariante ermöglicht, dass Werbezentralen 4 durch die Zentraleinheit 3 über die zukünftigen geografischen Positionen von mobilen Teilnehmern und die diesbezüglichen erwarteten Ankunftszeiten informiert werden können.

Die zweiten Mittel 32, 42 umfassen ein programmiertes Softwaremodul 38, 48, um unter Berücksichtigung der bestimmten zukünftigen geografischen Positionen, der diesbezüglichen erwarteten Zeitpunkte, des Verkehrswegs und/oder des Typs des Verkehrsmittels im Datenspeicher 33, 43 gespeicherte ortsspezifische Informationen auszuwählen und an das durch die Rufnummer oder die Teilnehmeridentifizierung bestimmte mobile Kommunikationsendgerät 1 des betreffenden mobilen Teilnehmers zu übermitteln. Der Fachmann wird verstehen, dass den ortsspezifischen Informationen in den Datenspeichern 33, 43 neben geografischen Positions- oder Ortsangaben auch Zeitangaben, und Inhaltskategorieangaben zugeordnet sein können.

Wie in der Figur 1 dargestellt ist, umfassen die zweiten Mittel 32, 42 zudem ein programmiertes Filtermodul 321, respektive 421, mit einem Datenspeicher 322, respektive 422, in dem teilnehmerspezifische Kriterien gespeichert sind, gemäss welchen programmierte Softwarefunktionen des Filtermoduls 321, 421 die ortsspezifischen Informationen bei deren Auswahl, respektive vor deren Übermittlung an den betreffenden mobilen Teilnehmer, filtern. Die teilnehmerspezifischen Kriterien, die ein Teilnehmerprofil definieren, können vom betreffenden mobilen Teilnehmer beispielsweise mittels eines Datenterminals über ein Kommunikationsnetz im Datenspeicher 322 der Zentraleinheit 3, respektive im Datenspeicher 422 der externen Einheit 4 (Werbezentrale 4), verwaltet werden, beispielsweise mittels des mobilen Kommunikationsendgeräts 1 über das Mobilfunknetz 2. Das Teilnehmerprofil kann auch auf der Chipkarte 14 gespeichert werden und von der Zentraleinheit 3, respektive von der externen Einheit 4 (Werbezentrale 4) über das Mobilfunknetz 2 gelesen werden.

### Liste der Bezugszeichen

- 1: Mobiles Kommunikationsendgerät
- 2: Mobilfunknetz
- 3: Zentraleinheit
- 4: Externe Einheit (Werbezentrale)
- 11: GPS-Empfänger
- 12: Anzeige
- 13: Bedienungselemente
- 14: Teilnehmeridentifizierungsmodul (SIM-Karte)
- 31: Erste Mittel
- 32: Zweite Mittel
- 33: Datenspeicher mit ortsspezifischen Informationen
- 34: Datenspeicher mit geografischen Karteninformationen
- 35: Datenspeicher mit erfassten geografischen Positionen
- 36, 37, 38: Programmierte Softwaremodule
- 42: Zweite Mittel
- 43: Datenspeicher mit ortsspezifischen Informationen
- 48: Programmiertes Softwaremodul
- 321: Programmiertes Filtermodul
- 322: Datenspeicher mit teilnehmerspezifischen Kriterien
- 421: Programmiertes Filtermodul
- 422: Datenspeicher mit teilnehmerspezifischen Kriterien

## Patentansprüche

1. Verfahren zur Übermittlung von ortsspezifischen Informationen über ein Mobilfunknetz (2) an mobile Teilnehmer, die jeweils mit einem mobilen Kommunikationsendgerät (1) ausgestattet sind, in welchem Verfahren geografische Positionen der mobilen Kommunikationsendgeräte (1) bestimmt und in einer computerbasierten Zentraleinheit (3) gespeichert werden, und in welchem Verfahren in der Zentraleinheit (3) jeweils basierend auf mehreren gespeicherten geografischen Positionen eines mobilen Kommunikationsendgeräts (1) eines betreffenden mobilen Teilnehmers mindestens eine zukünftige geografische Position bestimmt wird, die vom betreffenden mobilen Teilnehmer erwartungsweise erreicht werden wird,
wobei ortsspezifische Informationen, die der bestimmten zukünftigen geografischen Position zugeordnet sind, ausgewählt werden, **dadurch gekennzeichnet,**
**dass** in der Zentraleinheit (3) basierend auf mehreren gespeicherten geografischen Positionen des mobilen Kommunikationsendgeräts (1) des betreffenden mobilen Teilnehmers der Verkehrsweg bestimmt wird, auf dem sich der betreffende mobile Teilnehmer bewegt,
**dass** in der Zentraleinheit (3) basierend auf dem bestimmten Verkehrsweg der Typ des Verkehrsmittels bestimmt wird, das vom betreffenden mobilen Teilnehmer benutzt wird,
**dass** die ortsspezifischen Informationen unter Berücksichtigung des bestimmten Verkehrswegs und unter Berücksichtigung des bestimmten Typs des Verkehrsmittels ausgewählt werden, und
**dass** die ausgewählten ortsspezifischen Informationen an das mobile Kommunikationsendgerät (1) des betreffenden mobilen Teilnehmers übermittelt werden, bevor der betreffende mobile Teilnehmer die bestimmte zukünftige geografische Position erreicht hat.

2. Verfahren gemäss Anspruch 1, **dadurch gekennzeichnet, dass** in der Zentraleinheit (3) basierend auf den gespeicherten geografischen Positionen des mobilen Kommunikationsendgeräts (1) des betreffenden mobilen Teilnehmers die Geschwindigkeit des betreffenden mobilen Teilnehmers bestimmt wird, dass basierend auf der bestimmten Geschwindigkeit des betreffenden mobilen Teilnehmers ein Zeitpunkt bestimmt wird, zu dem der betreffende mobile Teilnehmer die bestimmte zukünftige geografische Position erwartungsweise erreichen wird, und dass die ortsspezifischen Informationen unter Berücksichtigung dieses bestimmten Zeitpunkts ausgewählt werden.

3. Verfahren gemäss einem der Ansprüche 1 oder 2, **dadurch gekennzeichnet, dass** die ortsspezifischen Informationen für den betreffenden mobilen Teilnehmer basierend auf teilnehmerspezifischen Kriterien gefiltert werden.

4. System zur Übermittlung von ortsspezifischen Informationen an mobile Teilnehmer, umfassend: mobile Kommunikationsendgeräte (1), mit denen die mobilen Teilnehmer jeweils ausgestattet sind, ein Mobilfunknetz (2), über welches die Informationen an die mobilen Teilnehmer übermittelt werden, Positionsbestimmungsmittel (11), mittels welchen jeweils aktuelle geografische Positionen der mobilen Kommunikationsendgeräte (1) bestimmt werden, und eine computerbasierte Zentraleinheit (3), in welcher die bestimmten geografischen Positionen gespeichert werden, wobei die Zentraleinheit (3) erste Mittel (31) umfasst, um basierend auf mehreren gespeicherten geografischen Positionen eines mobilen Kommunikationsendgeräts (1) eines betreffenden mobilen Teilnehmers mindestens eine zukünftige geografische Position zu bestimmen, die vom betreffenden mobilen Teilnehmer erwartungsweise erreicht werden wird,
wobei das System zweite Mittel (32, 42) umfasst, um ortsspezifische Informationen, die der bestimmten zukünftigen geografischen Position zugeordnet sind, auszuwählen, **dadurch gekennzeichnet,**
**dass** die ersten Mittel (31) so beschaffen sind, dass sie basierend auf mehreren gespeicherten geografischen Positionen des mobilen Kommunikationsendgeräts (1) des betreffenden mobilen Teilnehmers den Verkehrsweg bestimmen, auf dem sich der betreffende mobile Teilnehmer bewegt,
**dass** die ersten Mittel (31) so beschaffen sind, dass sie basierend auf dem bestimmten Verkehrsweg den Typ des Verkehrsmittels bestimmen, das vom betreffenden mobilen Teilnehmer benutzt wird,
**dass** die zweiten Mittel (32, 42) so beschaffen sind, dass die ortsspezifischen Informationen unter Berücksichtigung des bestimmten Verkehrswegs und unter Berücksichtigung des bestimmten Typs des Verkehrsmittels ausgewählt werden, und
**dass** die zweiten Mittel (32, 42) eingerichtet sind, die ausgewählten ortsspezifischen Informationen an das mobile Kommunikationsendgerät (1) des betreffenden mobilen Teilnehmers zu übermitteln, bevor der betreffende mobile Teilnehmer die bestimmte zukünftige geografische Position erreicht hat.

5. System gemäss Anspruch 4, **dadurch gekennzeichnet, dass** die ersten Mittel (31) so beschaffen sind, dass sie basierend auf den gespeicherten geografischen Positionen des mobilen Kommunikationsendgeräts (1) des betreffenden mobilen Teilnehmers die Geschwindigkeit des betreffenden mobilen Teilnehmers bestimmen, und dass sie basierend auf der bestimmten Geschwindigkeit des betreffenden mobilen Teilnehmers einen Zeitpunkt bestimmen, zu dem der betreffende mobile Teilnehmer die bestimmte zukünftige geografische Position erwartungsweise erreichen wird, und dass die zweiten Mittel (32, 42) so beschaffen sind, dass die ortsspezifischen Informationen unter Berücksichtigung dieses bestimmten Zeitpunkts ausgewählt werden.

6. System gemäss einem der Ansprüche 4 oder 5, **dadurch gekennzeichnet, dass** das System mindestens ein Filtermodul (321, 421) umfasst, um die ortsspezifischen Informationen für den betreffenden mobilen Teilnehmer basierend auf teilnehmerspezifischen Kriterien zu filtern.

## Revendications

1. Procédé et système pour la transmission d'informations géographiques spécifiques par l'intermédiaire d'un réseau mobile (2) à des abonnés mobiles qui sont munis respectivement d'un terminal de communication mobile (1), procédé dans lequel les positions géographiques des terminaux mobiles de communication (1) sont définies et stockées dans une unité informatique centrale (3) et procédé dans lequel dans l'unité centrale (3) respectivement en se basant sur des positions géographiques stockées d'un terminal mobile de communication (1) d'un abonné mobile considéré, au moins une position géographique future, qui sera atteinte prévisiblement par l'abonné mobile considéré, est définie, des informations spécifiques géographiques qui sont associées à une position géographique future, étant sélectionnées, **caractérisé**
**en ce que** dans l'unité centrale (3) respectivement en se basant sur des positions géographiques stockées d'un terminal mobile de communication (1) d'un abonné mobile considéré, le parcours, sur lequel se déplace l'abonné mobile concerné, est défini,
**en ce que** dans l'unité centrale (2) en se basant sur le trajet défini, le type de moyen de transport qu'emprunte l'abonné mobile considéré, est défini
**en ce que** les informations géographiques spécifiques sont sélectionnées en tenant compte du trajet défini et en tenant compte du type défini du moyen de transport, et
**en ce que** les informations géographiques spécifiques sélectionnées sont transmises au terminal de communication mobile (1) de l'abonné mobile concerné avant que l'abonné mobile concerné n'ai atteint la position géographique définie future.

2. Procédé selon la revendication 1, **caractérisé en ce que** dans l'unité centrale (3) respectivement en se basant sur des positions géographiques stockées d'un terminal mobile de communication (1) de l'abonné mobile considéré, la vitesse de l'abonné mobile considéré est définie, **en ce que** basé sur la vitesse définie de l'abonné mobile considéré, il est défini un moment où l'abonné mobile concerné atteindra la positon géographique définie future de manière prévisible et **en ce que** les informations géographiques spécifiques de ce moment défini sont sélectionnées en tenant compte de ce moment.

3. Procédé selon l'une des revendications 1 ou 2, **caractérisé en ce que** les informations géographiques spécifiques pour l'abonné mobile considéré sont filtrées en se basant sur des critères spécifiques d'abonnés.

4. Système de transmission d'informations géographiques spécifiques à des abonnés mobiles comprenant : des terminaux de communication mobiles (1), dont sont munis les abonnés mobiles, un réseau mobile (2) permettant de transmettre les informations aux abonnés mobiles, des moyens de détermination de position (11) permettant de déterminer respectivement des positions géographiques actuelles des terminaux de communication mobiles (1) et une unité informatique centrale (3) dans laquelle sont stockées les positions géographiques définies, l'unité centrale (3) comprenant des premiers moyens (31) pour déterminer en se basant sur plusieurs positions géographiques stockées d'un terminal mobile de communication (1) d'un abonné mobile considéré au moins une position géographique future qui sera atteinte prévisiblement par l'abonné mobile considéré,
le système comprenant des seconds moyens (32, 42) pour sélectionner des informations géographiques spécifiques qui sont associées à la position géographique définie future, **caractérisé en ce que**
les premiers moyens (31) sont réalisés de sorte qu'ils définissent en se basant sur plusieurs positions géographiques stockées du terminal mobile de communication (1) de l'abonné mobile concerné le trajet sur lequel se déplace l'abonné mobile concerné,
**en ce que** les premiers moyens (31) sont réalisés de sorte qu'ils déterminent en se basant sur le trajet déterminé le type de moyen de transport qui est utilisé par l'abonné mobile considéré,
**en ce que** les seconds moyens (32, 42) sont configurés de manière à ce que les informations spécifiques géographiques soient sélectionnées en tenant compte du trajet défini et en tenant compte du type défini du moyen de transport, et
**en ce que** les seconds moyens (32, 42) sont configurés de manière à transmettre les informations géographiques spécifiques au terminal mobile de communication (1) de l'abonné mobile considéré avant que l'abonné mobile considéré n'ai atteint la position géographique future déterminée.

5. Système selon la revendication 4, **caractérisé en ce que** les premiers moyens (31) sont réalisés de sorte qu'ils déterminent en se basant sur les positions géographiques stockées du terminal mobile de communication (1) de l'abonné mobile considéré, la vitesse de l'abonné mobile considéré et **en ce qu'**en se basant sur la vitesse de l'abonné mobile considéré, ils déterminent un moment où l'abonné mobile considéré va atteindre prévisiblement la position géographique future et **en ce que** les seconds moyens (32, 42) sont réalisés de sorte que les informations géographiques spécifiques sont sélectionnées en tenant compte de ce moment défini.

6. Système selon l'une des revendications 4 ou 5, **caractérisé en ce que** le système comprend au moins un module de filtrage (321, 421) pour filtrer les informations géographiques spécifiques pour l'abonné mobile considéré en se basant sur des critères spécifiques aux abonnés.

## Claims

1. Method for transmitting location-specific data over a mobile radio network (2) to mobile subscribers who are each equipped with a mobile communication terminal (1), in which method geographic positions of the mobile communication terminals (1) are determined and stored in a computer-based central unit (3), and in which method in the central unit (3), based in each case on a plurality of stored geographic positions of a mobile communication terminal (1), at least one future geographic position is determined which, in an anticipated way, will be reached by the respective mobile subscriber,
location-specific data which are assigned to the determined future geographic position being selected, **characterised**
**in that**, in the central unit (3), based on a plurality of stored geographic positions of the mobile communication terminal (1) of the respective mobile subscriber, the route is determined on which the respective subscriber is moving,
**in that**, in the central unit (3), based on the determined route, the type of transport means used by the respective mobile subscriber is determined,
**in that** the location-specific data are selected taking into consideration the determined route and taking into consideration the determined type of transport means, and
**in that** the selected location-specific data are transmitted to the mobile communication terminal (1) of the respective mobile subscriber before the respective mobile subscriber has reached the determined future geographic position.

2. Method according to claim 1, **characterised in that**, in the central unit (3), based on the stored geographic positions of the mobile communication terminal (1) of the respective mobile subscriber, the speed of the respective mobile subscriber is determined, **in that**, based on the determined speed of the respective mobile subscriber, a point in time is determined at which, in an anticipated way, the respective mobile subscriber will reach the determined future geographic position, and **in that** the location-specific data are selected taking into consideration this determined point in time.

3. Method according to one of the claims 1 or 2, **characterised in that** the location-specific data for the respective mobile subscriber are filtered based on subscriber-specific criteria.

4. System for transmitting location-specific data to mobile subscribers, comprising: mobile communication terminals (1), with which the mobile subscribers are each equipped, a mobile radio network (2) over which the data are transmitted to the mobile subscribers, position-determining means (11) by means of which current geographic positions of the mobile communication terminals (1) are determined in each case, and a computer-based central unit (3) in which the determined geographic positions are stored, the central unit (3) comprising first means (31) for determining, based on a plurality of stored geographic positions of a mobile communication terminal (1) of a respective mobile subscriber, at least one future geographic position which, in an anticipated way, will be reached by the respective mobile subscriber,
the system comprising second means (32, 42) for selecting location-specific data which are assigned to the determined future geographic position, **characterised**
**in that** the first means (31) are provided such that they determine, based on a plurality of stored geographic positions of the mobile communication terminal (1) of the respective mobile subscriber, the route on which the respective mobile subscriber is moving,
**in that** the first means (31) are provided such that they determine, based on the determined route, the type of transport means used by the respective mobile subscriber,
**in that** the second means (32, 42) are provided such that the location-specific data are selected taking into consideration the determined route and taking into consideration the determined type of transport means, and
**in that** the second means (32, 42) are set up to transmit the selected location-specific data to the mobile communication terminal (1) of the respective mobile subscriber before the respective mobile subscriber has reached the determined future geographic position.

5. System according to claim 4, **characterised in that** the first means (31) are provided such that they determine the speed of the respective mobile subscriber based on the stored geographic positions of the mobile communication terminal (1) of the respective mobile subscriber, and **in that** they determine, based on the determined speed of the respective mobile subscriber, a point in time at which, in an anticipated way, the respective mobile subscriber will reach the determined future geographic position, and **in that** the second means (32, 42) are provided such that the location-specific data are selected taking into consideration this determined point in time.

6. System according to one of the claims 4 or 5, **characterised in that** the system comprises at least one filter module (321, 421) to filter the location-specific data for the respective mobile subscriber on the basis of subscriber-specific criteria.
